Europäisches Patentamt

European Patent Office

Office européen des brevets

(11) Publication number: 0 364 197
A2

# EUROPEAN PATENT APPLICATION

(21) Application number: 89310312.7

(22) Date of filing: 09.10.89

(51) Int. Cl.5: B60P 3/20

(30) Priority: 11.10.88 GB 8823790

(43) Date of publication of application:
18.04.90 Bulletin 90/16

(84) Designated Contracting States:
BE DE ES FR GB IT NL

(71) Applicant: YORK TRAILER COMPANY LIMITED
Yafforth Road
Northallerton North Yorkshire, DL7 8UE(GB)

(72) Inventor: Endelin, Claude
42 Ter, Route de Mâcon
F-71450 Blonzy(FR)

(74) Representative: Allen, Oliver John Richard et
al
Lloyd Wise, Tregear & Co. Norman House
105-109 Strand
London, WC2R 0AE(GB)

(54) Improvements in and relating to refrigerated vehicles and containers.

(57) A refrigerated vehicle or container, with a load-carrying space of which is divided into compartments by one or more bulkheads. Each bulkhead has a seal along its edges, the seals being carried on supports mounted on the bulkhead edges, one of which supports is movable relative the edge of the bulkhead to force the seal carried thereon against the periphery of the load carrying space. The seals are so arranged that these supports, which are at least partially formed of metal, are enclosed between the seal carried thereon and the bulkhead edge on which they are mounted. The seals are made of a flexible material, normally rubber, which is insulative and accordingly the heat transfer across the seal supports is minimised.

## IMPROVEMENTS IN AND RELATING TO REFRIGERATED VEHICLES AND CONTAINERS

This invention relates to refrigerated vehicles such as lorries, trailers, semi-trailers, vans and containers for vehicles and in particular to refrigerated vehicles or containers with a load-carrying space which is divided into a number of compartments.

The division of the load-carrying space of a refrigerated vehicle or container is carried out with partitions, normally in the form of an insulating panel, known as bulkheads. The bulkheads may be fixed in position or they may be capable of being fixed in a number of different positions to give compartments of different sizes. One design of movable bulkhead has two positions, a vertical position in which it forms the compartments and a horizontal position adjacent the roof. The bulkhead is hinged to struts which connect it to a sliding frame. The hinges and struts co-operate to allow the bulkhead to move between the two positions. The sliding frame includes wheels normally in the form of ball-bearings which move within a C-shaped metal section secured along the longitudinal walls of the vehicles so that the bulkhead can be moved when container, into any desired location in the vehicle or container before being pulled manually into the vertical position.

The temperature of the compartments is normally controlled by supplying cold, and in some arrangements hot, air to the compartments in response to the temperature of the compartments as determined by probes provided therein.

Known bulkheads have been provided with rubber seals on all four edges. In one known arrangement, when the bulkhead is in the vertical position, the top and bottom seals are compressed between the bulkhead and the roof and floor of the refrigerated vehicle or container. U-shaped channels are provided along each side edge of the bulkheads, the side seals being secured to the convex side of the webs thereof. The channels are biased by springs towards a position where the concave side of their webs abuts the edge of the bulkhead, in which position the side seals are uncompressed. The bulkheads include locking mechanisms, activated by a handle, which force the U-shaped channels towards the walls of the refrigerated vehicle or container, against the spring bias, to compress the side seals. The flanges of each channel enclose the gap between the seal and the edge of the bulkhead.

This arrangement is not very efficient at preventing heat transfer between the compartments, in particular, the channels to which the side seals are secured are metallic and therefore allow heat transfer from a hotter to a colder compartment. This may result in damage to goods in the colder compartment especially those positioned adjacent the bulkheads. Furthermore, the amount of cool air which will have to be supplied to the colder compartment to keep its temperature down will be high so that power consumption of the refrigeration unit employed to provide the cool air, and consequently running costs, will also be high.

A refrigerated vehicle or container in accordance with the invention has at least one bulkhead for dividing the load-carrying space of the vehicle or container into compartments, the bulkhead(s) being provided with a seal along each edge carried on supports mounted on the edges of the bulkhead(s), wherein at least one of the supports is movable relative the edge of the bulkhead to force the seal carried thereon against part of the periphery of the load carrying space, and, the seals are so dimensioned and arranged that each support is enclosed by the seal carried thereon and the bulkhead edge on which it is mounted.

The advantage of this is that the seal supports, which are normally formed from metal to provide sufficient strength, are enclosed by the seal, which is formed from a flexible and therefore normally insulative material, and the bulkhead which is formed from insulative panels of, for example, expanded polyvinyl chloride. The insulation of the metallic support substantially reduces the heat losses between compartments.

Preferably, the seals comprise a main body member which is secured to the associated support and, in use, is compressed between the periphery of the load-carrying space and the support, and two strips, each secured at one end to the main body member and at the other end to the bulkhead, the strips being positioned on opposite sides of the support. The support is then enclosed and the air gaps between the strips and the support serve to further insulate the two compartments on either side of the bulkhead.

The strips are preferably extensible so that they are not stressed when employed with a support which is movable relative the bulkhead. This can be achieved either by forming them from elastic material or by making them in the form of a concertina. The main body member may comprise two aligned tubes secured side-by-side to a base which is itself secured to the appropriate support. All the parts of the seals may be integral and the seals are suitably made of rubber.

Preferably the bulkhead is capable of being moved between a horizontal position adjacent the roof of the load-carrying space and a vertical position in which the load-carrying space is divided.

The bulkhead and seals are preferably dimensioned so that when the bulkhead is in the vertical position, the top and bottom seals are compressed but the side seals are not. The side seals are therefore suitably each secured to a movable support.

A locking device is preferably provided for each movable support, which comprises a shaft movable along an aperture in the bulkhead, one end of which is connected to the support and the other end of which is pivotally connected to a handle provided on the face of the bulkhead, so that movement of the handle causes movement of the support relative the bulkhead. The supports suitably consist of a U-channel, the flanges of which have integral extensions which lie generally parallel to the web, the seal being secured to the extensions.

This invention will now be further described by way of example with reference to the accompanying drawings in which:

Figure 1 is a view from the rear of part of a refrigerated vehicle or container in accordance with the invention with the bulkhead vertical;

Figure 2 is a front view of the bulkhead of Figure 1;

Figures 3a and 3b are enlarged view of part of the bulkhead of Figure 2;

Figure 4 is a view along IV - IV of the vehicle of Figure 1;

Figure 5 is a similar view to Figure 2 but showing the left hand section only and with the bulkhead horizontal;

Figure 6 is a view of the seal shown in Figure 5 with the locking device operated and

Figure 7 is an enlarged view of part of the refrigerated vehicle of Figure 1.

The bulkhead 2 shown in the Figures comprises a panel of insulating material with a skin of metal or plywood secured to each side by adhesive. The skin is itself coated with a glass fibre reinforced polyester to render it waterproof. All four edges of the bulkhead are provided respectively with seals, 4, 6, 8 and 10 which are shown in dotted outline in Figure 2.

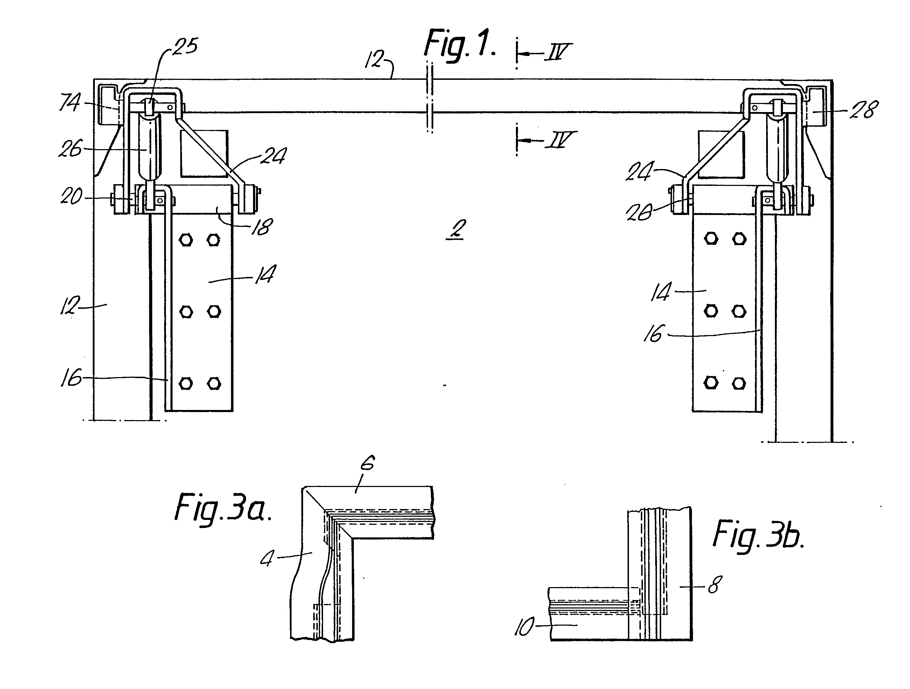

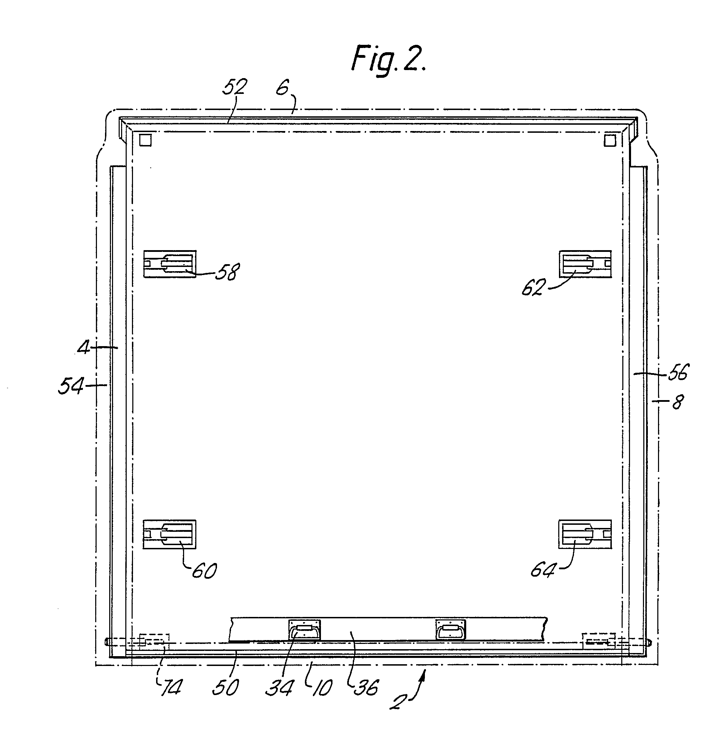

The bulkhead 2 is employed to partition the interior of a refrigerated vehicle or container, the perimeter of the load-carrying space of which is indicated at 12 in Figure 1. As shown in Figures 1, 4 and 5 the bulkhead has two aluminium mounts 14 bolted thereto each of which has a triangular portion 16 which extends outwards from the bulkhead. The mounts 14 also include a keeper assembly 18, through which is passed a swivel shaft 20. The bulkhead 2 swivels around these shafts 20 when moving from the horizontal to the vertical position or vice-versa as described below.

To allow the bulkhead to be used to form any desired size of compartment, it is mounted in the refrigerated vehicle or container by two sliding frames 22 which can move lengthwise along the vehicle. Each sliding frame 22 comprises an elongated three sided housing 24 which is secured at one end to each end of the associated swivel shaft 20 (see Figure 1). One end 25 of a strut 26 is secured within the housing 24 at the end of the housing 24 distant from the bulkhead. The strut is secured at its other end to the tip of the triangular extension 16 of the associated mount 14.

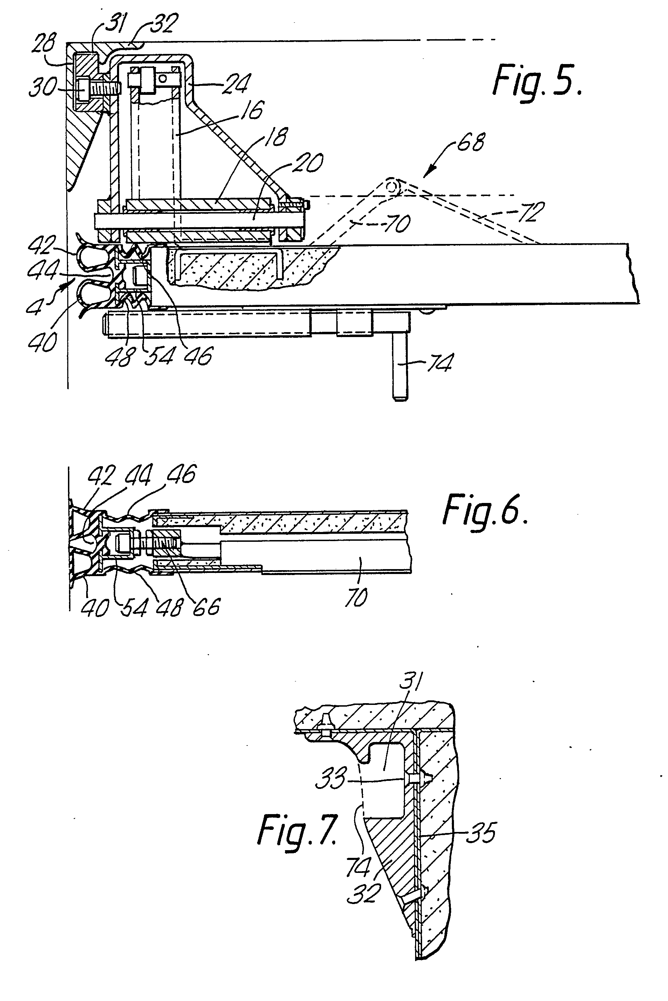

The sliding frames 22 also include sliders 28 which are screwed (see 30) to the housings 24. The sliders 28 move within apertures 31 (see Figure 7) provided in rails 32 which are secured by for example rivets and gluing, see 33, 35, to the upper corners of the load carrying compartment and which extend along the length thereof.

The sliders 28 allow the bulkhead 2 to be moved to any desired position within the vehicle. Movement of the bulkhead 2 is effected when it is in the horizontal position, as shown in Figures 5 and 6 by pushing the bulkhead manually to cause the sliders to move within the apertures 31.

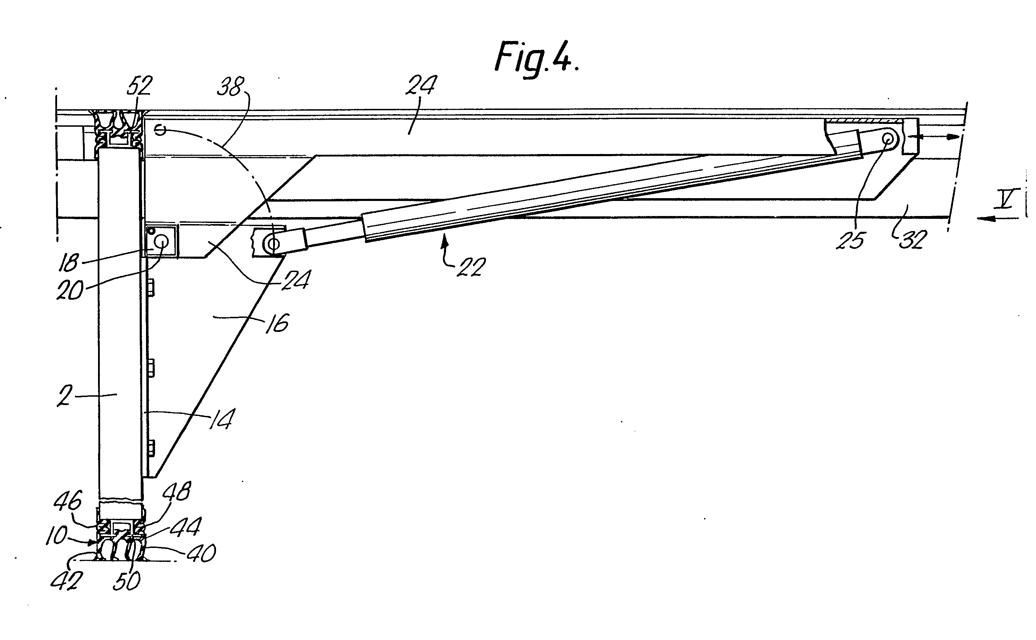

The bulkhead 2 is moved from the vertical position shown in Figure 4 to the horizontal position by pulling handles 34 provided on kickstrip 36 upwards. The bulkhead 2 rotates around the shafts 20 and the connections between the triangular mount extensions 16 and the struts 26 move along a path indicated by dotted line 38 within the housings 24. The struts 26 extend to allow the rotation of the bulkhead and mount secured thereto. Movement from the horizontal to the vertical position is effected by pulling downwards on the handles.

The upper and lower seals, 6 and 10, of the bulkhead 2 are fixed in place and the dimensions are such that when the bulkhead is rotated into the vertical position they are compressed between the bulkhead and the ceiling and floor.

The seals comprise two parallel spaced tubes 40 and 42 connected to a base portion 44. The base portion 44 is connected to the bulkhead 2 by two spaced strips 46, 48 which are concertined. The seals are supported by channels 50, 52 which are secured at one end to the bulkhead and at the other to the base portion 44 intermediate the two strips 46, 48 which therefore insulate the channels 50, 52. The seals may be formed in two halves, each half comprising a tube, base portion and a strip. The parts of each half are integral and the seals may be made of rubber.

The side seals 4 and 8 are similar to the end seals 6 and 10 but their supporting channels 54, 56 are not secured directly to the bulkhead rather they can move relative to the bulkhead to ensure effective sealing along the sides as described below.

When the bulkhead is swung into the vertical position the side seals 4, 8 are not compressed. To force them against the sides of the load carrying space, a number of locking devices are provided. In the bulkhead shown in Figure 1, four locking devices 58, 60, 62, 64 are shown, one of which 60 is shown in greater detail in Figure 5 and 6. The device 60 comprises a locking shaft 66 movable within an aperture in the bulkhead which is secured at one end to the aluminium support channel 54. At the other end the shaft 66 is pivoted to an actuating handle 68 which comprises two members 70 and 72 which are hingedly connected at one end. The other end of member 70 is pivoted to locking shaft 66 whilst the other end of member 72 is secured to the bulkhead. In the unlocked position the members 70 and 72 are at an angle to each other. When the actuating handle 68 is pushed down against the bulkhead to bring the portions 70 and 72 into alignment, they cause the shaft 66 to move to the left and partially out of the aperture to force the channel 54 and seal 4 towards the wall of the load carrying space and compress the tubular portions 40 and 42 into a generally triangular shape to seal the sides of the bulkhead. Alternatively, the handle 68 may comprise a single member.

This locking mechanism has been found to give very good sealing since the seals are forced hard against the trailer walls. There are no parts which, when the seals are compressed, intrude into the load-carrying space. Two locking devices are provided for each edge seal which ensures that good compression of seal is achieved along the whole of its length.

When the support channels 54 of the side seals 4, 8 are forced away from the bulkhead to compress the tubular portions 40 and 42, the seal strips 46, 48 unfold and extend as shown in Figure 6. They enclose both the support channel 54 and the exposed portion of the locking shaft 66 and so insulate these metallic parts. Their ability to extend due to the concertina folds ensures that they do not become over stressed which could cause them to tear.

The support channels 50, 52 and 54 are in the form of a U channel with extentions parallel to the web connected to the flanges . The extensions and web can be formed from a plastics material which helps reduce even further heat transfer via the channels whilst the flanges are generally formed from aluminium to give them sufficient strength.

The bulkhead may be locked in position with bolts 74, holes being provided at intervals for this purpose along the wall of the load-carrying space.

The connections between the end and side seals are shown in Figures 3a and 3b. The upper seal 6 and the side seals 4 and 8 are tucked and glued together to make a seam at 45 degrees to the horizontal (Figure 3a). This ensures that the top corners are always square so that gaps are not formed between the seals and the walls or roof of the vehicle. The bottom seal 10 is tucked and bonded inside the side seals (Figure 3b). It will be appreciated that the top corners will be forced against the rails 32 when the bulkhead is vertical. To ensure good sealing, the shape of the rails and sliders is arranged to give as smooth a profile as possible, see dotted outline 74 in Figures 2 and 7, so that there are no gaps between the seals and the rails.

The bulkhead described above can be simply and easily moved within the refrigerated vehicle and is arranged to reduce substantially the heat losses between the compartments which it forms.

## Claims

1. A refrigerated vehicle or container having at least one bulkhead for dividing the load-carrying space of the vehicle or container into compartments, the bulkhead(s) being provided with a seal along each edge carried on supports mounted on the edges of the bulkhead(s), wherein at least one of the supports is movable relative the edge of the bulkhead to force the seal carried thereon against part of the periphery of the load carrying space, and, the seals are so dimensioned and arranged that each support is enclosed by the seal carried thereon and the bulkhead edge on which it is mounted.

2. A refrigerated vehicle or container as claimed in Claim 1 wherein the seals comprise a main body member which is secured to the support and, in use, is compressed between the periphery of the load-carrying space and the support, and two strips, each secured at one end to the main body member and at the other end to the bulkhead, the strips being positioned on opposite sides of the support.

3. A refrigerated vehicle or container as claimed in Claim 2 wherein the main body portion of the seals comprises two aligned tubes secured side by side to a base which is itself secured to the support.

4. A refrigerated vehicle as claimed in either Claim 2 or 3 wherein the strips are arranged to be extensible, either by forming them from an elastic material or by making them in the form of a concertina.

5. A refrigerated vehicle or container as claimed in any preceding Claim wherein the seal are formed from rubber.

6. A refrigerated vehicle or container as claimed in any preceding Claim wherein movable supports are provided for those edges of the bulkhead(s) which, when the load-carrying space is divided by the bulkhead(s), are adjacent the sides of the load-carrying space.

7. A refrigerated vehicle or container as claimed in any preceding Claim wherein a locking device is provided for each movable support which when activated causes movement of the movable support(s) relative the bulkhead.

8. A refrigerated vehicle or container as claimed in Claim 7 wherein each locking device includes a shaft which is movable along an aperture provided in the bulkhead, one end of the shaft being connected to the associated movable support, the other end being pivotally connected to a handle, so that movement of the handle causes movement of the support relative the bulkhead.

9. A refrigerated vehicle as claimed in any preceding Claim wherein each support comprises a U-shaped member, the flanges of which have integral extensions which are generally parallel to the web thereof, the seal being secured to the extensions.

10. A refrigerated vehicle or container as claimed in any preceding claim wherein the bulkhead(s) are movable between a horizontal position adjacent the roof of the load-carrying space and a vertical position in which the load-carrying space is divided.

Fig.1.

Fig.3a.

Fig.3b.

EP 0 364 197 A2

# Fig.2.

52  6

58

62

4

54

56

8

60

64

74  50  34  10  36  2

# Fig.4.

EP 0 364 197 A2

Fig. 5.

Fig. 6.

Fig. 7.